# EUROPEAN PATENT APPLICATION

(11) **EP 4 129 080 A1**
(43) Date of publication of application: **08.02.2023**
(21) Application number: 21781614.9
(22) Date of filing: 24.03.2021
(51) Int. Cl.: A23L 2/52, A23L 2/00, A23L 33/12

(54) **HEAT-STERILIZED PACKAGED BEVERAGE CONTAINING MEDIUM-CHAIN FATTY ACID TRIGLYCERIDE AND ASCORBIC ACID**

(30) Priority: 02.04.2020 JP 2020066429
(71) Applicant: Suntory Holdings Limited, Osaka 530-8203 (JP)
(72) Inventor: NONAKA,, Shota, Kawasaki-shi, Kanagawa 211-0067 (JP); SOGUCHI, Akira, Kawasaki-shi, Kanagawa 211-0067 (JP)
(74) Representative: Vossius & Partner Patentanwälte Rechtsanwälte mbB
(86) International application number: PCT/JP2021/012203
(87) International publication number: WO 2021/200457

(57) **Abstract**

A heat-sterilized packaged beverage containing ascorbic acid in an amount of 6 mg/100ml or more and having a ratio of the amount of ascorbic acid to the amount of a medium-chain fatty acid triglyceride (ascorbic acid/medium-chain fatty acid triglyceride) of 0.0003-0.1340 inclusive, to which 1mg/100ml or more of catechins (the total amount of catechin, catechin gallate, epicatechin, epicatechin gallate, galocatechin, galocatechin gallate, epigalocatechin and epigalocatechingalate) are added. Thus, an unpleasant smell like deteriorated rice bran, said smell being generated during the storage of the heat-sterilized packaged beverage that contains ascorbic acid and the medium-chain fatty acid triglyceride within the range as specified above, is reduced.

## Description

### TECHNICAL FIELD

The present invention relates to a heat sterilized and packaged beverage comprising a medium chain triglyceride and ascorbic acid in a certain ratio.

### BACKGROUND ART

Medium chain triglycerides are oils/fats that are found naturally in, for example, palm oil and palm kernel oil. Medium chain triglycerides are absorbed in the small intestine, then directly delivered to the liver through the portal vein, and metabolized quickly in the liver. Thus, the medium chain triglycerides are utilized as an efficient supplemental source of energy. In addition, it is known that the medium chain triglycerides are unlikely to be accumulated as body fat compared with common oils/fats, which are composed of long chain triglycerides. For example, the medium chain triglycerides can be added to a usual diet for a dieter or a person with carbohydrate restriction or a person with a small appetite as a result of advanced age or illness, to thereby favorably supplement energy.

In addition to the above, various effects of the medium chain triglycerides have been reported. For example, PTL 1 discloses use of a medium chain triglyceride (MCT) for treating wide variety of diseases including neurological diseases, and conditions and diseases associated with brain energy deficiency.

As for the effects other than that in vivo, PTL 2, for example, discloses that when a medium chain triglyceride is added, to a conventional milk fat-containing beverage, in an amount of 0.01 to 1 % by weight based on the whole of the beverage, generation of white suspended matter derived from milk fat is suppressed to stabilize milk fat in the beverage including milk.

Ascorbic acid (vitamin C) is used as an antioxidant in a packaged beverage.

### CITATION LIST

### PATENT LITERATURE

PTL 1: JP 2018-537091A
PTL 2: JP 2007-61053A

### SUMMARY OF INVENTION

### TECHNICAL PROBLEM

It is considered that it is desirable to develop a packaged beverage containing a medium chain triglyceride and having highly satisfying palatability so as to usually and easily take a medium chain triglyceride, which exhibits various effects as described above. As a result of studies by the present inventors, however, it has been found that when a beverage containing ascorbic acid (vitamin C), in addition to a medium chain triglyceride, in a certain ratio is heat sterilized and packaged, an unpleasant odor like that from deteriorated rice bran is generated after storage corresponding to that at normal temperature for about seven months. As a result of studies by the present inventors, it has been found that such an unpleasant odor like that from deteriorated rice bran is generated during storage of a heat sterilized and packaged beverage containing ascorbic acid in an amount of 6 mg/100 ml or more and also in a ratio of the amount of ascorbic acid to the amount of medium chain triglyceride (ascorbic acid/medium chain triglyceride) of 0.0003 or more and 0.1340 or less. In addition, it has also been found that such an unpleasant odor is hardly perceptible immediately after heat-sterilization and packaging, but is perceptible after storage.

An object of the present invention is to reduce the unpleasant odor like that from deteriorated rice bran, the odor generated during long-term storage of a heat sterilized and packaged beverage containing ascorbic acid in an amount of 6 mg/100 ml or more and also in a ratio of the amount of ascorbic acid to the amount of medium chain triglyceride (ascorbic acid/medium chain triglyceride) of 0.0003 or more and 0.1340 or less.

### SOLUTION TO PROBLEM

As a result of further diligent studies, the present inventors have found that the unpleasant odor like that from deteriorated rice bran, the odor generated during storage of the above-described heat sterilized beverage, can be reduced by incorporating one or more catechin compounds selected from the group consisting of catechin, catechin gallate, epicatechin, epicatechin gallate, galocatechin, galocatechin gallate, epigalocatechin, and epigalocatechingalate, in a total amount of the catechin compounds of 1 mg/100 ml or more, into the beverage containing ascorbic acid in an amount of 6 mg/100 ml or more and also in a ratio of the amount of ascorbic acid to the amount of medium chain triglyceride (ascorbic acid/medium chain triglyceride) of 0.0003 or more and 0.1340 or less. Specifically, the present invention relates to the following.
[1] A heat sterilized and packaged beverage comprising:
   ascorbic acid in an amount of 6 mg/100 ml or more and in a ratio of a mass of the ascorbic acid to a mass of a medium chain triglyceride, ascorbic acid/medium chain triglyceride, of 0.0003 or more and 0.1340 or less, and
   further comprising one or more catechin compounds selected from catechin, catechin gallate, epicatechin, epicatechin gallate, galocatechin, galocatechin gallate, epigalocatechin, or epigalocatechingalate, in a total amount of the catechin compounds of 1 mg/100 ml or more.
[2] The heat sterilized and packaged beverage according to [1], comprising the medium chain triglyceride in an amount of 500 mg/100 ml or more.
[3] The heat sterilized and packaged beverage according to [1] or [2], wherein a medium chain fatty acid in the medium chain triglyceride is a saturated fatty acid having 8 carbon atoms and/or a saturated fatty acid having 10 carbon atoms.
[4] The heat sterilized and packaged beverage according to any one of [1] to [3], wherein the heat sterilization has been performed by a method including heating at 85°C for 30 minutes or a method having the same or higher efficacy than said method.
[5] A method for suppressing an unpleasant odor generated during storage of a heat sterilized and packaged beverage comprising ascorbic acid in an amount of 6 mg/100 ml or more and in a ratio of an amount of the ascorbic acid to an amount of a medium chain triglyceride, ascorbic acid/medium chain triglyceride, of 0.0003 or more and 0.1340 or less, the method comprising:
   incorporating, into the beverage, one or more catechin compounds selected from catechin, catechin gallate, epicatechin, epicatechin gallate, galocatechin, galocatechin gallate, epigalocatechin, or epigalocatechingalate, in a total amount of the catechin compounds of 1 mg/100 ml or more.

### ADVANTAGEOUS EFFECTS OF INVENTION

The present invention can provide a heat sterilized and packaged beverage that contains a medium chain triglyceride and ascorbic acid in a certain ratio and yet has a reduced unpleasant odor like that from deteriorated rice bran when the beverage is heat sterilized and stored. Heat sterilized and packaged beverages may be stored for a relatively long period of time before drinking, and according to the present invention, there can be provided a packaged beverage containing a medium chain triglyceride that is unlikely to arise the problem of an unpleasant odor after storage and therefore has the high palatability. It is considered that the medium chain triglyceride-containing beverage having the high palatability serves as a convenient source of medium chain triglyceride intake for a person who commonly takes it with expectation of the effects of medium chain triglycerides.

### DESCRIPTION OF EMBODIMENTS

### <Ascorbic Acid>

The heat sterilized and packaged beverage of the present invention contains ascorbic acid. Ascorbic acid as used herein refers to L-ascorbic acid, unless otherwise noticed. L-ascorbic acid may also be called vitamin C. To a beverage, ascorbic acid may be added in the form of an ascorbate salt acceptable for food application (for example, sodium ascorbate, potassium ascorbate, calcium ascorbate, magnesium ascorbate, ammonium ascorbate, ascorbic acid glycoside, ascorbyl stearate, and ascorbyl palmitate). Alternatively a natural material rich in ascorbic acid (for example, a natural material derived from a fruit, such as lemon, orange, and acerola, or a natural material derived from a vegetable, such as broccoli, brussels sprouts, sweet peppers, Japanese mustard spinach, and cauliflower) may be added to the beverage of the present invention to thereby incorporate ascorbic acid into the beverage.

The heat sterilized and packaged beverage of the present invention comprises ascorbic acid in an amount of 6 mg/100 ml or more, more preferably 10 mg/100 ml or more, and even more preferably 16 mg/100 ml or more. The upper limit of the amount of ascorbic acid is not particularly limited, but the amount of ascorbic acid is preferably 80 mg/100 ml or less, and more preferably 30 mg/100 ml or less, in view of acidity generated by addition of ascorbic acid. The heat sterilized and packaged beverage of the present invention has a ratio of the mass of the ascorbic acid to the mass of a medium chain triglyceride described later (ascorbic acid/medium chain triglyceride) of 0.0003 or more and 0.1340 or less, and more preferably 0.0010 or more and 0.050 or less. The present inventors have been found that an unpleasant odor like that from deteriorated rice bran is generated from a heat sterilized and packaged beverage when the beverage contains ascorbic acid in an amount of 6 mg/100 ml or more and also in a ratio of the mass of ascorbic acid to the mass of medium chain triglyceride of 0.0003 or more and 0.1340 or less and undergoes storage corresponding to that at normal temperature for about seven months. The present invention is based on the finding that such an unpleasant odor like that from deteriorated rice bran can be reduced by combination use with a specific amount or more of a catechin compound, which will be described later. The mass of ascorbic acid herein is a value obtained by converting the mass of ascorbic acid and a salt thereof used into the mass of "ascorbic acid (C₆H₈O₆)." The amount of the medium chain triglyceride and that of the catechin compound will be described later.

The amount of ascorbic acid in the packaged beverage can be measured by the following method.

The container of the packaged beverage is opened, and the beverage is appropriately diluted with pure water. The resultant is filtered through a membrane filter, and the filtrate was then analyzed by high performance liquid chromatography (HPLC). The conditions for analysis are as follows.
- column: Shodex RSpak KC-811 (8.0 mm I.D. × 300 mm)
- column temperature: 40°C
- mobile phase: 10 mmol/l phosphoric acid
- detection: UV 210 nm
- amount injected: 20 µl
- flow rate: 0.5 ml/min

### <Medium Chain Triglyceride>

The heat sterilized and packaged beverage of the present invention comprises a medium chain triglyceride (hereinafter also abbreviate as MCT). Herein, the MCT refers to a triglyceride whose constitutional fatty acid is a saturated fatty acid having 8 carbon atoms (caprylic acid) and/or a saturated fatty acid having 10 carbon atoms (capric acid). One MCT molecule may include a single kind of saturated fatty acid, or may include both the saturated fatty acid having 8 carbon atoms and the saturated fatty acid having 10 carbon atoms. The MCT used may be a mixture of plural kinds of such MCT molecules.

In the whole of the MCT, the ratio (mass ratio) between the saturated fatty acid having 8 carbon atoms (C8) and the saturated fatty acid having 10 carbon atoms (C10) is not particularly limited, and preferably C8:C10= 5:95 to 95:5, more preferably 40:60 to 75:25, and even more preferably 50:50 to 60:40. The method for measuring the amounts of the constitutional fatty acids in the whole of the MCT will be described later.

As the MCT, a MCT derived from a natural material or a MCT produced by chemical synthesis can be used, for example. MCTs are commercially available. Commercially available MCT products (for example, a MCT oil) may contain, in addition to the MCT, a medium chain fatty acid, a diglyceride and monoglyceride of a medium chain fatty acid, a glyceride of a short chain fatty acid or a long chain fatty acid, and the like, as sub-components. Such a product in which these are co-present can be used as long as the amount of the MCT defined below falls within the range according to the present invention.

The amount of the MCT in the heat sterilized and packaged beverage of the present invention is within the range such that the ratio of the mass of the ascorbic acid to the mass of the MCT, ascorbic acid/MCT, of 0.0003 or more and 0.1340 or less. The present inventors have found that when a heat sterilized and packaged beverage contains a MCT in a ratio of ascorbic acid to the MCT within the above-describe range, the beverage after storage for a long period of time generates an unpleasant odor like that from deteriorated rice bran. The present invention is based on a finding that such an unpleasant odor like that from deteriorated rice bran can be reduced by combination use with a specific amount of a catechin compound, which will be described later.

The amount of the MCT included in the heat sterilized and packaged beverage is not particularly limited as long as it is an amount such that ascorbic acid/MCT (mass ratio) is 0.0003 or more and 0.1340 or less; however, it is preferable to contain a large amount of the MCT in view of the effects of the MCT on health. For example, the amount of the MCT is preferably 500 mg/100 ml or more, preferably 1000 mg/100 ml or more, and more preferably 3000 mg/100 ml or more. The upper limit of the amount of the MCT is not particularly limited; however, if the amount is more than 32000 mg/100 ml, rough texture is felt on the throat when drank, and the amount of the MCT is more preferably 32000 mg/100 ml or less, and even more preferably 20000 mg/100 ml or less.

The amount of the MCT herein refers to the amount of the triglyceride whose constitutional fatty acid is a saturated fatty acid having 8 carbon atoms (caprylic acid) and/or a saturated fatty acid having 10 carbon atoms (capric acid). The amount of the MCT in the packaged beverage can be measured by the following method.

The container of the packaged beverage is opened and lipid is extracted from the beverage by an appropriate method; the content of triglycerides is then determined according to AOCS Ce5-86; the amount of each fatty acid is determined according to AOCS Ce1f-96; and from these values, the amount of the triglyceride can be calculated, constitutional fatty acid of the triglyceride being a saturated fatty acid having 8 carbon atoms (caprylic acid) and/or a saturated fatty acid having 10 carbon atoms (capric acid), to obtain the amount of the MCT.

### <Catechin Compound>

The heat sterilized and packaged beverage of the present invention comprises a catechin compound, in addition to ascorbic acid and the MCT described above. Incorporating the catechin compound in an amount of 1 mg/100 ml or more into a heat sterilized and packaged beverage containing ascorbic acid in an amount of 6 mg/100 ml or more and in a ratio of the amount of ascorbic acid to the amount of the MCT (ascorbic acid/MCT) of 0.0003 or more and 0.1340 or less can reduce an unpleasant odor to be otherwise generated after storage of the beverage for a long period of time, the odor being like that from deteriorated rice bran. Herein, eight members: catechin, catechin gallate, epicatechin, epicatechin gallate, galocatechin, galocatechin gallate, epigalocatechin, and epigalocatechingalate are collectively referred to as the "catechin compound." The beverage of the present invention contains one or more from the above-described eight catechin compounds. The "amount of the catechin compound" herein refers to the total amount of the above-described eight members. Specifically, when the beverage includes only one of the above-described eight catechin compounds, the "amount of the catechin compound" is the amount of the one catechin compound, and when the beverage includes two or more of the above-described eight catechin compounds, the "amount of the catechin compound" is the total amount of the two or more catechin compounds.

As the catechin compound, a commercially available product may be used. The catechin compound may be incorporated into the beverage by adding a natural material containing the catechin compound, such as tea leaves, to the beverage of the invention.

The heat sterilized and packaged beverage of the present invention comprises the catechin compound in an amount of 1 mg/100 ml or more, more preferably 5 mg/100 ml or more, and even more preferably 10 mg/100 ml or more. The upper limit of the amount of the catechin compound is not particularly limited, and the amount of the catechin compound is preferably 120 mg/100 ml or less, and more preferably 90mg/100 ml or less, in view of increase of the bitterness due to the catechin compound. The proportion of each catechin compound to the total amount of the catechin compounds is not particularly limited; however, the amount of epigalocatechingalate is preferably 0.05 mg/100 ml or more, and preferably 0.07 mg/100 ml or more, for example.

The amount of the catechin compound in the packaged beverage can be measured by the following method.

The container of the packaged beverage is opened, and the solids is removed from the beverage with a membrane filter (pore diameter: 0.45 µm). Then, the filtrate is analyzed by high performance liquid chromatography (HPLC).
- HPLC system: TOSOH HPLC system LC8020 model II
- column: TSKgel ODS80T sQA (4.6 mm × 150 mm)
- column temperature: 40°C
- mobile phase A: water/acetonitrile/trifluoroacetic acid (90:10:0.05)
- mobile phase B: water/acetonitrile/trifluoroacetic acid (20:80:0.05)
- detection: UV 275 nm
- amount injected: 20 µl
- flow rate: 1 ml/min
- gradient program:

| time (min) | %A | %B |
|---|---|---|
| 0 | 100 | 0 |
| 5 | 92 | 8 |
| 11 | 90 | 10 |
| 21 | 90 | 10 |
| 22 | 0 | 100 |
| 29 | 0 | 100 |
| 30 | 100 | 0 |

- reference material: catechin, epicatechin, galocatechin, epigalocatechin, catechin gallate, epicatechin gallate, galocatechin gallate, and epigalocatechingalate

### <Heat Sterilized and Packaged Beverage>

A heat sterilized and packaged beverage containing ascorbic acid in an amount of 6 mg/100 ml or more and in a ratio of the amount of ascorbic acid to the amount of the MCT (ascorbic acid/MCT) of 0.0003 or more and 0.1340 or less has the problem of an unpleasant odor generated during storage of the beverage, the odor being like that from deteriorated rice bran, and the present invention solves such a problem by incorporating a specific amount or more of the catechin compound into the beverage. The beverage of the present invention is one that has undergone both heat sterilization and packaging. In the production of the "heat sterilized and packaged beverage", the order of the heat sterilization and the packaging is not particularly limited, and these may be carried out in an ordinary manner for producing a packaged beverage. For example, when making a canned beverage, a predetermined amount of a formulated liquid may be filled in a can, followed by retort sterilization, and when making a beverage in a polyethylene terephthalate (PET) bottle, a paper pack, a cup, or a glass bottle, UHT sterilization or the like may be carried out, followed by hot-packing, or aseptic packing at a low temperature, of a predetermined amount.

Herein, "heat sterilization" refers to a method including heating at 85°C for 30 minutes or a method having the same or higher efficacy than it. More preferably, the heat sterilization is a method including heating at 120°C for 4 minutes or a method having the same or higher efficacy than it. A method for calculating the temperature and time for "the same or higher efficacy" is described in "Handbook of administrative plan for hygiene control in production of soft beverage; November, 2018; Japan Soft Beverage Association."

The type of the container for packaging the beverage of the present invention is not particularly limited and, for example, may be a container commonly used, including an aluminum can, a steel can, a PET bottle, a glass bottle, a paper container, and a cup. After the beverage of the present invention is filled in such a container, the container is closed.

### <Others>

In addition, the beverage of the present invention may include various additives as in common beverages, including a seasoning such as a sweetener, a vitamin, a coloring agent, an antioxidant, an emulsifier, a stabilizer, a preservative, a pH regulator, and a quality stabilizer, as long as these do not impair the effect of the present invention. The beverage of the present invention may also include tea extract, coffee extract, carbon dioxide, fruit juice, milk or milk products, alcohol, or others, according to the kind of the beverage.

The kind of the beverage of the present invention is not particularly limited. Examples thereof include a tea beverage, a coffee beverage, an energy drink, a carbonated beverage, a cocoa beverage, a fruit beverage, a sports drink, a milk beverage, and an alcoholic beverage. Among these, a tea beverage is a particularly preferable mode. The "tea beverage" refers to a beverage including extract from tea leaves or extract from cereals as the main ingredient. Examples thereof include beverages based on non-fermented tea such as green tea (e.g., Sen-cha, Fukamushi-cha, Kamairi-cha, Tamaryoku-cha, Temomi-cha, Kabuse-cha, Gyokuro, and Then-cha), semi-fermented tea such as oolong tea (e.g., Tieguanyin, Shikisyu, Huangjingui, and Wuyi Tea), fermented tea such as black tea (e.g., Darjeeling, Assam, and Sri Lanka), and cereal tea such as barley tea, brown rice tea, and buckwheat tea.

### <Method>

In another aspect, the present invention is a method for reducing an unpleasant odor like that from deteriorated rice bran, the odor otherwise generated during storage of a heat sterilized and packaged beverage comprising ascorbic acid in an amount of 6 mg/100 ml or more and in a ratio of the amount of the ascorbic acid to the amount of a MCT (ascorbic acid/MCT) of 0.0003 or more and 0.1340 or less. In still another aspect, the present invention is a method for producing a heat sterilized and packaged beverage comprising ascorbic acid in an amount of 6 mg/100 ml or more and in a ratio of the amount of the ascorbic acid to the amount of a MCT (ascorbic acid/MCT) of 0.0003 or more and 0.1340 or less, wherein an unpleasant odor otherwise generated after storage of the beverage for a long period of time is reduced, the odor being like that from deteriorated rice bran. These method each specifically include the following steps:
providing a beverage containing ascorbic acid in an amount of 6 mg/100 ml or more and in a ratio of the amount of ascorbic acid to the amount of the MCT (ascorbic acid/MCT) of 0.0003 or more and 0.1340 or less;
incorporating, into the beverage, one or more catechin compounds selected from catechin, catechin gallate, epicatechin, epicatechin gallate, galocatechin, galocatechin gallate, epigalocatechin, or epigalocatechingalate, in a total amount of the catechin compounds of 1 mg/100 ml or more; and
then heat sterilizing and packaging the resulting beverage.

### EXAMPLES

The present invention will be specifically described in detail below by illustrating Experimental Examples, but the present invention is not limited thereto.

### <Production of Heat Sterilized and Packaged Beverage, 1>

To deionized water, sodium caseinate, sucrose fatty acid ester (SE-1670, manufactured by Mitsubishi Chemical Foods), and glycerin fatty acid ester (Taiyo 01, manufactured by Taiyo Kagaku Co., Ltd.), as emulsifiers, were added in amounts of 1 g, 0.8 g, and 0.5 g, respectively, per kilogram water. Ascorbic acid (L-ascorbic acid, manufactured by DSM), a MCT (Scole (registered trademark) 64G, manufactured by The Nisshin OilliO Group, Ltd.; composition of fatty acids: C8 fatty acid 60 mass%, C10 fatty acid 40 mass%), and a catechin compound (Sunphenon (registered trademark) EGCg-OP, manufactured by Taiyo Kagaku Co., Ltd.) were added thereto, followed by mixing. The mixed liquid was filled into a can, and the can was closed, followed by heat sterilization at 125°C for 5 minutes, to thereby obtain a heat sterilized and packaged beverage. The beverage was subjected to an accelerated storing test that corresponded to storage at normal temperature for about seven months. The amount of ascorbic acid, the amount of the MCT, the value of ascorbic acid (VC)/MCT, and the amount of the catechin compound of each beverage after the accelerated storing test are shown in Table 1. The beverages after the accelerated storing test were subjected to the following organoleptic evaluation.

### <Organoleptic Evaluation>

Each beverage after the storing test described above was cooled to 5°C, and the can was opened, followed by subjecting the organoleptic evaluation. Three sufficiently trained and specializing members of a panel drank the beverage to organoleptically evaluate "a flavor like an unpleasant odor generated from deteriorated rice bran" on the evaluation scale described below. The "flavor like an unpleasant odor generated from deteriorated rice bran" specifically means "a flavor like that generated when oil/fat is deteriorated or oxidized," and before the evaluation, the standards of the members of the panel for giving the evaluation scores on the evaluation scale were aligned with each other. The average of the evaluation scores given by three members is shown in Table 1. In the evaluation, ten points was full marks (an unpleasant odor/flavor was not felt at all), and one point was the lowest mark (the beverage was not drinkable because of a too strong unpleasant odor/flavor). A beverage given an average score of 5.0 or more is acceptable as a beverage. As a result of the evaluation, there was almost no variation in the evaluation scores among the members of the panel.

**[Table 1]**

| | Ascorbic Acid (mg/100 ml) | MCT (mg/100 ml) | VC/MCT | Catechin Compound (mg/100 ml) | Result of Organoleptic Evaluation |
|---|---|---|---|---|---|
| Reference Example 1 | 0 | 500 | 0.0000 | 0 | 9.0 |
| Reference Example 2 | 3 | 1500 | 0.0020 | 0 | 6.8 |
| Reference Example 3 | 6 | 32000 | 0.0002 | 0 | 6.8 |
| Comparative Example1 | 67 | 500 | 0.1340 | 0 | 2.2 |
| Comparative Example2 | 40 | 1000 | 0.0400 | 0 | 2.0 |
| Comparative Example3 | 6 | 3000 | 0.0020 | 0 | 1.8 |
| Comparative Example4 | 6 | 20000 | 0.0003 | 0 | 1.8 |
| Comparative Example5 | 10 | 32000 | 0.0003 | 0 | 1.6 |
| Example 1 | 67 | 500 | 0.1340 | 1 | 6.4 |
| Example 2 | 65 | 500 | 0.1300 | 120 | 6.6 |
| Example 3 | 40 | 1000 | 0.0400 | 1 | 6.7 |
| Example 4 | 16 | 2000 | 0.0080 | 1 | 6.2 |
| Example 5 | 6 | 3000 | 0.0020 | 1 | 5.5 |
| Example 6 | 6 | 3000 | 0.0020 | 90 | 7.0 |
| Example 7 | 6 | 20000 | 0.0003 | 1 | 5.9 |
| Example 8 | 10 | 32000 | 0.0003 | 1 | 5.4 |

From the results of Reference Examples 1 and 2 in Table 1, it is found that when a beverage contained ascorbic acid in an amount less than 6 mg/100 mg, the beverage did not generate so much an unpleasant odor like that from deteriorated rice bran, and was acceptable as a beverage, even if it also contained a MCT and underwent heat sterilization and storage. From the result of Reference Example 3, it is found that when a beverage had a ratio, ascorbic acid/MCT, without a range of 0.0003 or more and 0.1340 or less, the beverage did not generate so much an unpleasant odor like that from deteriorated rice bran, and was acceptable as a beverage, even if it contained ascorbic acid in an amount of 6 mg/100 ml and a MCT and underwent heat sterilization and storage.

On the other hand, from the results of Comparative Examples 1 to 5, it is found that when a beverage contained ascorbic acid in an amount of 6 mg/100 ml or more and in a ratio, ascorbic acid/MCT, of 0.0003 or more and 0.1340 or less, the beverage considerably generated an unpleasant odor like that from deteriorated rice bran, after heat sterilization and storage. When the beverages in Comparative Examples 3 and 4 each were drank before heat sterilization, an unpleasant odor like that from deteriorated rice bran was slight (the evaluation scores were 8.3 and 7.5, respectively). When the beverages in Comparative Examples 1 to 5 each were drank after heat sterilization and adjustment to 5°C, an unpleasant odor like that from deteriorated rice bran was slight (evaluation score: 7.5 to 8.8). It is found from these that an unpleasant odor like that from deteriorated rice bran was generated by heat sterilization and storage.

From the results of Examples 1 to 8, it is found that even when a beverage contained ascorbic acid in an amount of 6 mg/100 ml or more and in a ratio, ascorbic acid/MCT, of 0.0003 or more and 0.1340 or less, an unpleasant odor like that from deteriorated rice bran, which would be otherwise generated by heat sterilization and storage, was significantly reduced by co-existence of the catechin compound in an amount of 1 mg/100 ml, and the beverage was thus acceptable as a beverage (evaluation score: 5.0 or more).

### <Production of Heat Sterilized and Packaged Beverage, 2>

To deionized water, sodium caseinate, sucrose fatty acid ester (SE-1670, manufactured by Mitsubishi Chemical Foods), and glycerin fatty acid ester (Taiyo 01, manufactured by Taiyo Kagaku Co., Ltd.), as emulsifiers, were added in amounts of 1 g, 0.8 g, and 0.5 g, respectively, per kilogram water. Any one of two commercially available black tea powders and one commercially available green tea powder which each contained catechin compounds was dissolved therein. Ascorbic acid (L-ascorbic acid, manufactured by DSM) and a MCT (Scole (registered trademark) 64G, manufactured by The Nisshin OilliO Group, Ltd.; composition of fatty acids: C8 fatty acid 60 mass%, C10 fatty acid 40 mass%) were added thereto, to thereby prepare two black tea beverages and one green tea beverage. Each of the resulting beverages was filled into a can, and the can was closed, followed by heat sterilization at 125°C for 5 minutes, to thereby obtain a heat sterilized and packaged beverage. Each of the beverages was subjected to an accelerated storing test that corresponded to storage at normal temperature for about seven months. The amount of ascorbic acid, the amount of the MCT, the value of ascorbic acid (VC)/MCT, and the amounts of the various catechin compounds of the beverages after the accelerated storing test are shown in Table 2. The units for the amount of ascorbic acid, the amount of the MCT, and the amounts of the various catechin compounds are "mg/100 ml." The beverages after the storing test were each subjected to the organoleptic evaluation under the above-described conditions in the same manner as in "Production 1" described above. The results are shown in Table 2.

**[Table 2]**

| | Example 9 (Black Tea) | Example 10 (Black Tea) | Example 11 (Green Tea) |
|---|---|---|---|
| Ascorbic Acid | 20 | 16 | 14 |
| MCT | 3000 | 3000 | 3000 |
| VC/MCT | 0.0067 | 0.0053 | 0.0047 |
| Total of Catechin Compounds | 5 | 10 | 25 |
| Galocatechin | 0.35 | 0.69 | 1.40 |
| Epigalocatechin | 0.53 | 1.05 | 5.70 |
| Catechin | 0.54 | 1.08 | 0.30 |
| Epigalocatechingalate | 0.07 | 0.14 | 12.00 |
| Epicatechin | 3.12 | 6.24 | 1.70 |
| Galocatechin Gallate | 0.25 | 0.50 | 1.70 |
| Epicatechin Gallate | 0.09 | 0.17 | 2.00 |
| Catechin Gallate | 0.06 | 0.11 | 0.20 |
| Result of Organoleptic Evaluation | 6.4 | 6.5 | 7.5 |

From the results in Table 2, it is found that black tea beverages and a green tea beverage each containing ascorbic acid in an amount of 6 mg/100 ml or more and in a ratio, ascorbic acid/MCT, of 0.0003 or more and 0.1340 or less, and also containing the catechin compounds in a total amount of 1 mg/100 ml or more generated less unpleasant odor like that from deteriorated rice bran and was thus acceptable as a beverage.

## Claims

1. A heat sterilized and packaged beverage comprising:
ascorbic acid in an amount of 6 mg/100 ml or more and in a ratio of a mass of the ascorbic acid to a mass of a medium chain triglyceride, ascorbic acid/medium chain triglyceride, of 0.0003 or more and 0.1340 or less, and
further comprising one or more catechin compounds selected from catechin, catechin gallate, epicatechin, epicatechin gallate, galocatechin, galocatechin gallate, epigalocatechin, or epigalocatechingalate, in a total amount of the catechin compounds of 1 mg/100 ml or more.

2. The heat sterilized and packaged beverage according to claim 1, comprising the medium chain triglyceride in an amount of 500 mg/100 ml or more.

3. The heat sterilized and packaged beverage according to claim 1 or 2, wherein a medium chain fatty acid in the medium chain triglyceride is a saturated fatty acid having 8 carbon atoms and/or a saturated fatty acid having 10 carbon atoms.

4. The heat sterilized and packaged beverage according to any one of claims 1 to 3, wherein the heat sterilization has been performed by a method including heating at 85°C for 30 minutes or a method having the same or higher efficacy than said method.

5. A method for suppressing an unpleasant odor generated during storage of a heat sterilized and packaged beverage comprising ascorbic acid in an amount of 6 mg/100 ml or more and in a ratio of an amount of the ascorbic acid to an amount of a medium chain triglyceride, ascorbic acid/medium chain triglyceride, of 0.0003 or more and 0.1340 or less, the method comprising:
incorporating, into the beverage, one or more catechin compounds selected from catechin, catechin gallate, epicatechin, epicatechin gallate, galocatechin, galocatechin gallate, epigalocatechin, or epigalocatechingalate, in a total amount of the catechin compounds of 1 mg/100 ml or more.
